# EUROPEAN PATENT SPECIFICATION

(11) **EP 3 731 225 B1**
(45) Date of publication and mention of the grant of the patent: **12.10.2022**
(21) Application number: 19170727.2
(22) Date of filing: 24.04.2019
(51) Int. Cl.: G10H 1/40, G10H 1/00, B60W 50/14, G08B 3/10

(54) **METHOD AND ARRANGEMENT FOR GENERATING WARNING SIGNALS**
VERFAHREN UND ANORDNUNG ZUR ERZEUGUNG VON WARNSIGNALEN
PROCÉDÉ ET AGENCEMENT POUR GÉNÉRER DES SIGNAUX D'AVERTISSEMENT

(43) Date of publication of application: 28.10.2020
(73) Proprietor: Harman Becker Automotive Systems GmbH, 76307 Karlsbad (DE)
(72) Inventor: Münch, Tobias, 81679 München (DE)
(74) Representative: Westphal, Mussgnug & Partner, Patentanwälte mbB

(56) References cited:
- US-A1- 2014 132 405
- US-A1- 2014 185 419
- US-A1- 2014 301 556

## Description

### TECHNICAL FIELD

The disclosure relates to a method and arrangement for generating warning signals, especially warning signals in a vehicle.

### BACKGROUND

Vehicles today provide many different driver assistance systems. Such driver assistance systems are configured to warn the driver of a vehicle if a critical situation arises and further to assist the driver in many different situations such as when pulling into a parking space. For example, a warning signal may be generated when it is detected that the driver or a passenger in the vehicle has not fastened his seatbelt, or if a blind spot assist detects another vehicle in the blind spot when the driver intends to change the lane. A park distance control system may generate a beeping signal indicating a distance between the vehicle and an object in the vehicle's surroundings. While such warning tones are helpful in alerting the driver of or in avoiding critical situations, they are often annoying for the driver as well as the passengers, especially when music is playing while an acoustical warning signal is generated.

US2014185419 discloses using the frequency characteristics of an alarm signal to selectively attenuate those frequencies in the audio signal being played back in a car.

### SUMMARY

A method includes receiving an audio signal representing speech or a musical piece currently reproduced by an audio system, analyzing the audio signal, and, if the audio signal represents a musical piece, determining at least one parameter of the musical piece, and, upon occurrence of a triggering event, generating a warning signal, wherein at least one but not all parameters of the warning signal are adjusted to correspond to the respective parameter of the musical piece.

An arrangement includes an audio system configured to reproduce an audio signal representing speech or a musical piece, an analyzing unit configured to analyze the audio signal, and, if the audio signal represents a musical piece, determine at least one parameter of the musical piece, and a warning signal generation unit that is configured to, upon occurrence of a triggering event, generate a warning signal, wherein at least one but not all parameters of the warning signal are adjusted to correspond to the respective parameter of the musical piece.

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The arrangement may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates an exemplary arrangement for generating warning signals.
Figures 2 to 5 schematically illustrate different beats of a warning signal according to different examples.
Figure 6 schematically illustrates an exemplary method for generating warning signals.

### DETAILED DESCRIPTION

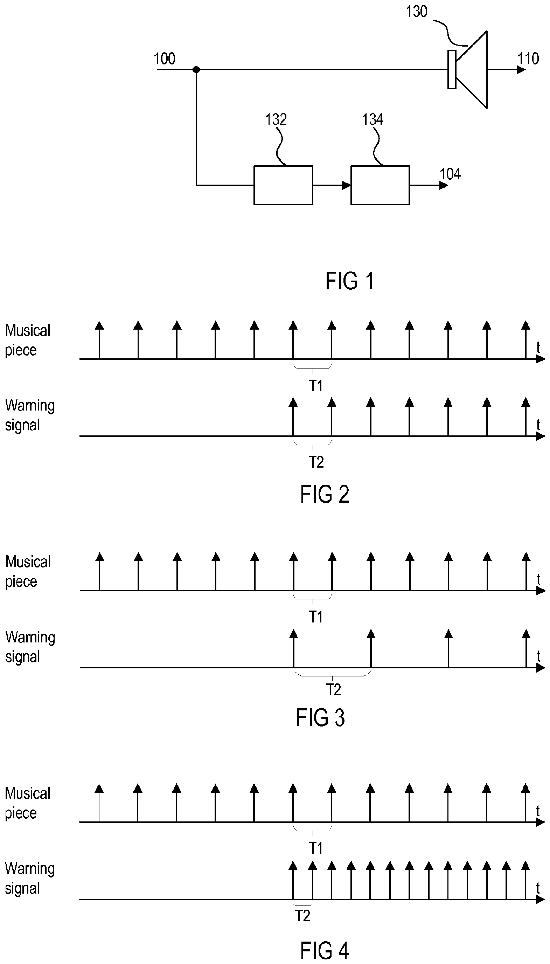

Referring to Figure 1, an arrangement for generating warning signals is exemplarily illustrated. An audio signal 100 is provided to an audio system 130. The audio signal 100 represents audio 110 which is reproduced by the audio system 130. The audio 110 may be speech or a musical piece, for example. The audio system 130 may comprise one or more sound reproduction units such as one or more loudspeakers, for example, that are configured to reproduce the audio 110. The audio system 130 may be arranged in a vehicle, for example.

The arrangement comprises an analyzing unit 132 that is configured to analyze the audio signal 100. The analyzing unit 132 may be configured to detect whether the audio 110 is a musical piece or a pure speech signal. If the audio 110 is a musical piece, the analyzing unit 132 may be further configured to determine at least one parameter of the musical piece (audio 110). A parameter of a musical piece 110 may be a rhythm, a beat, a tempo, a melody, a frequency, a time signature, the beats per minute, a volume level, the presence of at least one musical instrument, the presence of a bass drum, and the presence of a snare drum, for example. The analyzing unit 132 may apply any suitable signal processing techniques to the audio signal 100 to determine characteristics (parameters) of the musical content included therein. Musical information generally may be divided in time-based characteristics of the musical content (e.g., the timing (onset and/or duration) of musical notes), and frequency-based characteristics of the musical content (e.g., pitches or frequencies of musical notes).

The analyzing unit 132, if it is detected that the audio signal 100 comprises musical information, may asses the musical information of the audio signal 100 and attempt to accurately classify the information according to a number of different musical characteristics. Some of the characteristics may be predominantly pitch or frequency-based, such as key signatures, chords, some aspects of notes (e.g., note pitches, distinguishing polyphonic notes), and so forth. Groups of notes may be classified as melody or harmony. Other characteristics may be predominantly time-based, such as a number of measures or bass, time signatures, tempos, other aspects of notes (e.g., note onsets and lengths), rhythms, and so forth.

In the following, a definition is provided for the relevant terms that are needed for the understanding of the different embodiments.

The beat of a musical piece generally is a steady pulse that drives the music forward and provides a temporal framework of the piece of music. Often, the beat is also defined as the rhythm a listener would tap his toes to when listening to a piece of music.

The rhythm is generally defined as the aspect of music comprising all the elements (such as accent, meter, and tempo) that relate to forward movement, or as a regularly repeated pattern of sounds or beats used in a musical piece. Generally speaking, the rhythm may correspond to an overall "style" or "feel" for the musical information reflected in the timing patterns of notes.

The tempo in musical terminology is usually defined as the speed or pace of a given musical piece. The tempo may be measured in beats per minute BPM, for example. The inverse of tempo is sometimes referred to as beat period.

The melody is defined as a linear succession of musical tones that the listener perceives as a single entity. In its most literal sense, a melody is a combination of pitch and rhythm, while more figuratively, the term can include successions of other musical elements such as tonal color.

The time signature (also known as meter signature, or measure signature) is a notational convention used in Western musical notation to specify how many beats (pulses) are contained in each measure (bar), and which note value is equivalent to a beat. In a music score, the time signature appears at the beginning as a time symbol or stacked numerals, such as common time (C) or three-four time (3/4), immediately following the key signature (or immediately following the clef symbol if the key signature is empty). A mid-score time signature, usually immediately following a barline, indicates a change of meter. There are various types of time signatures, depending on whether the music follows regular (or symmetrical) beat patterns, including simple (e.g., 3/4 and 4/4), and compound (e.g., 9/8 and 12/8), or involves shifting beat patterns, including complex (e.g., 5/4 and 7/8), mixed (e.g., 5/8 & 3/8 or 6/8 & 3/4), additive (e.g., (3+4+4)/8), fractional (e.g., (2 ½) /4), and irrational meters (e.g., 3/10 or 5/24).

The following terms may also be useful for understanding certain concepts described above or to be described later.

Onset: refers to the beginning of a musical note or other sound.

Pitch: the physiological correlate of the fundamental frequency (f₀) of a note.

Chroma: musical pitches separated by an integer number of octaves belong to a common chroma (also known as pitch class). In Western music, twelve pitch classes are used.

Bar: a segment of time defined as a given number of beats of given duration. For example, in music with a 4/4 time signature, each bar (or measure) comprises four beats.

Downbeat: the first beat of a bar or measure.

Reverberation: the persistence of sound in a particular space after the original sound is produced.

Still referring to Figure 1, the arrangement further comprises a warning signal generation unit 134. The warning signal generation unit 134 is configured to generate, upon occurrence of a triggering event, a warning signal. The triggering event may comprise at least one of detecting a potentially hazardous situation, the driver engaging the reverse gear, the vehicle driving below a certain threshold speed, and detecting that a passenger of the vehicle is not wearing a seatbelt. Alternatively or additionally, any other triggering events are also possible. Generally, a warning signal may be an acoustic signal, a visual signal or a haptic signal, for example. Vehicles usually comprise multiple driver assistance systems that are configured to warn the driver of potentially hazardous situations or to assist the driver while performing certain actions. A park distance control system, for example, outputs warning tones that are indicative of a distance between the vehicle and one or more objects or obstacles in the surroundings of the vehicle. The park distance control system is usually activated when the driver engages the reverse gear or when the vehicle moves with a speed that is below a predefined threshold speed (e.g., below 10 km/h). When the vehicle is still relatively far away from an object or obstacle, the time intervals between successive warning tones are usually comparably long. The time intervals between the warning tones get shorter, the shorter the distance between the vehicle and the object or obstacle. Other systems generate warning tones if the driver or a passenger is not using his seatbelt, for example. Many other driver assistance systems are known that generate warning signals.

Such warning signals 104, especially acoustical warning signal, can be very annoying for the driver and the passengers. An annoying warning signal 104 may help to attract the driver's attention in critical or potentially hazardous situations. However, catching the driver's attention by means of an annoying warning signal may not be necessary for all applications and/or situations. The arrangement illustrated in Figure 1, therefore, is configured to generate warning signals 104 that are less annoying but may still be clearly perceived as warning signals.

Still referring to Figure 1, the signal generation unit 134 is configured to generate the warning signal 104 such that at least one parameter of the warning signal 104 is adjusted to correspond to the respective parameter of the currently playing musical piece 110. This will be further described with respect to Figures 2 to 5 in the following.

For example, the musical piece 110 may have a certain beat. This is exemplarily illustrated in Figure 2. In Figure 2, the musical piece 110 has a constant beat, with a first time period T1 between two successive pulses. In conventional arrangements, the warning signal 104 is output with a fixed beat, irrespective of the beat of a presently playing musical piece 110. This may be perceived as annoying by a user. According to one example, therefore, the beat of the warning signal 104 is adjusted to the beat of the currently playing musical piece 110. According to one example, the beat of the warning signal 104 is adjusted to be identical, or at least similar, to the beat of the musical piece 110 (e.g., T1 = T2 or T1 ≈ T2). Further, the warning signal 104 may comprise successive warning tones, wherein the successive warning tones are output in time with the beat of the musical piece 110.

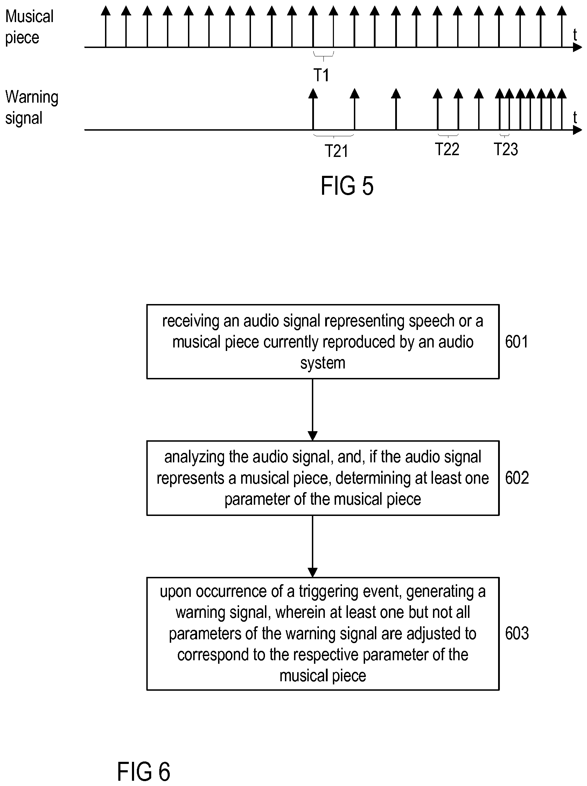

This, however, is only an example. The beat of the warning signal 104 may also be a multiple or a fraction of the beat of the musical piece 110, for example. This is exemplarily illustrated in Figures 3 (beat of warning signal 104 is a multiple of the beat of the musical piece 110, T2 = x ^{∗} T1, wherein x is an integer) and 4 (beat of the warning signal 104 is a fraction of the beat of the musical piece 110, T2 = T1/y). In the examples of Figures 3 and 4, the beat of the musical piece 110, as well as the beat of the warning signal 104, remain constant over time. However, as is exemplarily illustrated in Figure 5, it is also possible that the beat of the warning signal 104 changes over time. A park distance control system, for example, may require the beat of the warning signal 104 to become faster as the vehicle approaches an object or obstacle in its surroundings. According to one example, when the distance between the vehicle and an object or obstacle is still comparably large, the beat of the warning signal 104 may be a fraction of the beat of the musical piece 110 (T21 = x ^{∗} T1, wherein x is an integer). When the distance decreases, the beat of the warning signal 104 may become faster and may become identical to the beat of the musical piece 110 (T22 = T1). When the distance further decreases, the beat of the warning signal 104 may increase even further and may become a multiple of the beat of the musical piece 110 (T23 = T1/y). In this way, the purpose of the warning signal 104 (altering the driver) is still satisfied without being too annoying.

It is further possible to detect a present volume level of a currently playing musical piece 110. The warning signal 104 may be an acoustic signal that is output at a predefined volume level. If the volume level of the musical piece 110 is greater than a certain threshold volume level, the volume level of the musical piece 110 may be temporarily reduced while generating the warning signal 104. The certain threshold volume level may be well below the volume level of the warning signal 104. According to one example, the warning signal 104 may be reproduced at a volume level of between 60 dB and 80 dB. The volume level of the musical piece 110 may be reduced to 60dB or lower, for example. If the detected volume level of the musical piece 110 is already below the certain threshold volume level, no further reduction is required.

In order to still be able to differentiate the warning signal 104 from a currently playing musical piece 110, an acoustical warning signal 104 may comprise at least one parameter that is different from or even opposing the corresponding parameter of the musical piece 110. The warning signal 104 may be an acoustical signal such as a pure tone, for example. A pure tone is a tone having a sinusoidal waveform (sine wave). Any other tones or signals, however, are also possible. A pure tone generally greatly differs from the musical instruments present in the musical piece 110 and, therefore, is clearly distinguishable. According to another example, the warning signal 104 may resemble a musical instrument. The musical instrument resembled by the warning signal 104, however, may be a musical instrument not present in the musical piece 110. Generally speaking, the tonality and/or frequency of the warning signal 104 may differ from the tonality and/or frequency detected in the musical piece 110.

In this way, while the beat of the warning signal 104 may be adjusted to the beat of the musical piece 110, for example, other parameters such as, e.g., the tonality, frequency, loudness and equalizing of the warning tone 104 may differ from the respective parameters tonality, frequency, loudness and equalizing of the musical piece 110. Therefore, a warning tone 104 that is clearly perceptible as a warning tone may be smoothly integrated into a musical piece 110.

The driver of a vehicle may listen to music. However, as has been mentioned above, it is also possible that the driver is listening to an audio book or that he is listening to a radio program. That is, it is possible that no music is playing when a warning signal 104 is to be generated, and that the audio signal 100 only represents spoken language, for example. The analyzing unit 132, therefore, may further be configured to detect whether music is playing or not (audio signal 100 comprises musical signal or not). If no music is playing, the analyzing unit 132 may not have to further analyze the audio signal 100. If the audio signal 100 includes pure speech, a standard warning signal 104 may be generated, for example. The standard warning signal 104 may be a predetermined warning signal with a default configuration. Such a standard warning signal 104 may not be adjusted depending on the audio signal 100.

This, however, is only an example. It is also possible that if the audio signal 100 comprises pure speech, a warning signal 104 is generated that corresponds to the most recently generated warning signal 104. That is, if a warning signal 104 was generated during the same or a previous driving session, the settings of this warning signal 104 may be stored and used for a following warning signal 104. According to another example, the settings of the musical piece that was last reproduced by the audio system 130 may be stored and a subsequent warning signal 104 may be generated such that at least one parameter but not all parameters of the warning signal 104 correspond to the corresponding parameters of this last reproduced musical signal 110.

Usually, analyzing one or more parameters of a musical piece 110 requires a certain amount of time, e.g., 1s to 10s. This usually depends on the beat and the tempo of the musical piece. A fast beat may be analyzed faster than a slower beat, for example. This is because a certain number of beats are usually required to reliably make any predictions about the beat. With a faster beat, less time elapses until a certain number of beats occur as compared to the same number of beats in a slower beat. Therefore, if a warning signal 104 is to be generated and a musical piece 110 has been playing for less than the time that is required to analyze the musical piece 110, it may not be possible to reliably adapt the warning signal 104 to the currently playing musical piece 110. This may be the case if, e.g., the musical piece 110 has been playing for only 0s to about 4s, and the time needed to reliably analyze the relevant parameters of the musical signal 110 is more than 4s (e.g., 6s). These durations, however, are merely examples that are used for better understanding.

In such cases, it is possible to generate a default warning signal 104 similar to when pure speech is detected in the audio signal 100. It is also possible that a warning signal 104 in such cases is generated that corresponds to the most recently generated warning signal 104. That is, if a warning signal 104 has been generated during the same or a previous driving session, the settings of this warning signal 104 may be stored and used for a following warning signal 104. According to another example, the settings of the musical piece 110 that was last reproduced may be stored and a warning signal 104 may be generated such that at least one parameter but not all parameters of the warning signal 104 correspond to the corresponding parameters of this last reproduced musical piece 110. The warning signal 104 may be generated according to this setting for the whole duration of the warning signal 104. However, it is also possible that once the currently playing musical piece 110 has been fully analyzed, the settings of the warning signal 104 are adapted according to the presently playing musical piece 110.

The analyzing unit 132 may use machine learning algorithms to analyze the audio signal 100. Machine learning algorithms may include, but are not limited to, feature extraction and classification methods, or neuronal networks, for example. In machine learning, feature extraction starts from an initial set of measured data and builds derived values (features) intended to be informative and non-redundant, facilitating the subsequent learning and generalization steps. Feature extraction is a dimensionality reduction process, where an initial set of raw variables is reduced to more manageable groups (features) for processing, while still accurately and completely describing the original data set. Artificial neural networks are computing systems vaguely inspired by the biological neural networks that constitute animal brains. The neural network itself is not an algorithm, but rather a framework for many different machine learning algorithms to work together and process complex data inputs. Such systems "learn" to perform tasks by considering examples, generally without being programmed with any task-specific rules. Feature extraction and classification methods as well as neuronal networks are generally known, and will therefore not be described in further detail herein.

Certain information may be stored in a memory of the analyzing unit 132, for example. A memory may include a variety of computer-readable media selected for their size, relative performance, or other capabilities such as, e.g., volatile and/or non-volatile media, removable and/or non-removable media, etc. A memory may include cache, random access memory (RAM), storage, etc. Storage included as part of a memory may provide a non-volatile memory and include one or more different storage elements such as Flash memory, a hard disk drive, a solid state drive, an optical storage device, and/or a magnetic storage device. A memory may be included in a single computing device or may represent an aggregation of memory included in networked computing devices. A memory may include a plurality of modules used for performing various functions described herein. Such modules generally include program code that is executable by one or more processors, and may be implemented as software and/or firmware. In other embodiments, one or more of the modules are implemented in hardware as a separate application-specific integrated circuit (ASIC).

Today, radio stations usually transmit a certain amount of information about currently playing musical pieces (RDS, radio data system). Therefore, according to some embodiments, it is possible to easily analyze this data. For example, a certain amount of information may be stored concerning parameters of musical pieces 110. In this way, if the title and artist of a musical piece 110 are known, certain parameters could be retrieved from a look-up table, for example. This would render a further analysis of the audio signal 100 superfluous. Information about an artist and title could also be stored on a CD, USB or any other storage medium that might be used to store music and transfer an audio signal 100 to the audio system 130. Today, many music streaming services that allow users to listen to musical pieces on demand are known. When listening to musical pieces via such a music streaming service, generally a large amount of metadata is provided about a currently playing musical piece such as the genre, artist, title, and many more. If such information is transmitted from a music streaming service, certain parameters of the musical piece may be obtained or retrieved, e.g., by means of look-up tables, as has been described with respect to RDS data before.

However, such information about musical pieces 110 may not always be available. If further analysis of the audio signal 100 is required, the parameters of the audio signal 100 may be analyzed using any suitable technique. Many such techniques are known, such as comb-filter methods, autocorrelation, or Fourier transformation, for example.

Beat tracking is often based on onset detection, for example. According to several embodiments, onset detection may be carried out with a spectral based method. This may include the steps of creating a spectrogram, logarithmic compression, differentiation, accumulation, normalization, and peak picking. According to other embodiments, onset detection may also be carried out with an energy based method. This may include the steps of amplitude squaring, windowing, differentiation, half wave rectification, and peak picking.

Onset detection is a basic part of audio signal analysis. Therefore, many different algorithms have been implemented for this purpose. Many different algorithms are also known for tempo estimation. Beat tracking generally aims at determining individual beat positions. Tempo estimation is usually defined as the frequency with which humans "tap" along to the beat. Many different approaches to tempo estimation have been taken in the past. Some tempo estimation algorithms use bandpass filters followed by parallel comb-filters, followed by peak picking. Conventional bandpass approaches may be replaced with short-time Fourier transforms (STFTs), producing 36 band spectra. By differentiating and then half-wave rectifying the power in each band, band-specific onset strength signals (OSS) may be created, which may then be combined into four accent signals and fed into comb filters in order to detect periodicities.

Additionally or alternatively, it is also possible to determine certain characteristics of the musical piece 110 and then draw conclusions concerning certain parameters. For example, a bass drum or a snare drum may be identified in the musical piece 110. A bass drum may have certain characteristics. This also similarly applies for snare drums. For example, a bass drum is often used with a three-four (3/4) time signature. Therefore, if a bass drum has been identified, a three-four time signature of the musical piece 110 may be assumed without further analyzing the musical piece 110. This, however, is only an example. It is also possible, for example, to detect the frequency of occurrence of the bass drum. Based on this frequency of occurrence of the bass drum, the rhythm of the musical piece 110 may be determined. Any other rhythm-like patterns, however, may also be detected in the musical piece.

Equalization detection, for example, may be performed in the frequency domain by extracting main frequency curves and determining a mean value.

Level detection, for example, may comprise calculating root mean square (RMS) values. More sophisticated level detection methods may comprise calculating the loudness level according to International Telecommunication Union (ITU) standards.

According to some embodiments, if parameters such as rhythm, equalization, and volume level of the musical piece 110 have been determined, a warning signal 104 may be generated by adapting the rhythm to the rhythm of the musical piece 110, by adapting the volume level of the warning signal 104 to be greater than the volume level of the musical piece 110, and by adapting the equalization of the warning signal 104 to correspond to the equalization of the musical piece 110. A warning signal 104 that is generated as described above is perceived as being part of the music and, therefore, is not annoying for the driver and the passengers. Warning signals 104 are smoothly added to the musical piece 110 such that they are still clearly perceptible but not totally out of rhythm with the musical piece 110.

Now referring to Figure 6, an exemplary method for generating warning signals is illustrated. An audio signal 100 representing speech or a musical piece 110 currently reproduced by an audio system 130 may be received (step 601). The audio signal 100 may be analyzed and, if the audio signal 100 represents a musical piece 110, at least one parameter of the musical piece 110 may be determined (step 602). Upon occurrence of a triggering event, a warning signal 104 may be generated, wherein at least one but not all parameters of the warning signal 104 are adjusted to correspond to the respective parameter of the musical piece 110.

While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except by the attached claims.

## Claims

1. A method comprising:
receiving an audio signal (100) representing speech or a musical piece (110) currently reproduced by an audio system (130);
analyzing the audio signal (100), and, if the audio signal (100) represents a musical piece (110), determining at least one parameter of the musical piece (110); and
upon occurrence of a triggering event, generating a warning signal (104), wherein at least one but not all parameters of the warning signal (104) are adjusted to correspond to the respective parameter of the musical piece (110).

2. The method of claim 1, wherein the warning signal (104) is an acoustical signal.

3. The method of claim 1 or 2, wherein the audio signal (100) represents a musical piece (110) and the at least one parameter of the musical piece (110) comprises at least one of
a rhythm;
a beat;
a tempo;
a melody;
a frequency;
a time signature;
the beats per minute;
a volume level;
the presence of at least one musical instrument;
the presence of a bass drum; and
the presence of a snare drum.

4. The method of any of claims 1 to 3, wherein the at least one parameter of the warning signal (104) that is adjusted to correspond to the respective parameter of the musical piece (110) comprises at least one of
a rhythm;
a beat;
a tempo;
a time signature; and
the beats per minute.

5. The method of any of claims 1 to 4, wherein
the audio signal (100) represents a musical piece (110) and determining at least one parameter of the musical piece (110) comprises determining the beat of the musical piece (110); and
the warning signal (104) is generated such that a beat of the warning signal (104) is equal to, a multiple of, or a fraction of the detected beat of the musical piece (110).

6. The method of claim 5, wherein the warning signal (104) comprises a plurality of successive warning tones, wherein the successive warning tones are generated in time with the beat of the musical piece (110).

7. The method of any of claims 2 to 6, wherein
the audio signal (100) represents a musical piece (110) and determining at least one parameter of the musical piece (110) comprises determining the presence of at least one musical instrument in the musical piece (110); and
the warning signal (104) is generated to comprise a plurality of successive pure tones or to resemble a musical instrument that has not been detected in the musical piece (110).

8. The method of any of the claims 2 to 7, wherein
the audio signal (100) represents a musical piece (110) and determining the at least one parameter of the musical piece (110) comprises determining a volume level of the musical piece (110);
if the detected volume level of the musical piece (110) is greater than a predefined threshold level, reducing the volume level of the musical piece (110) to a volume level below the threshold volume level; and
generating the warning signal (104) at a volume level greater than the threshold volume level.

9. The method of claim 2, wherein
the audio signal (100) represents pure speech; and
the warning signal (104) is generated as a standard warning signal (104) having a default configuration that is not adjusted depending on the audio signal (100).

10. The method of claim 2, wherein
the audio signal (100) represents pure speech; and
the warning signal (104) is generated to correspond to a previously generated warning signal (104).

11. The method of claim 2, wherein
the audio signal (100) represents pure speech; and
at least one but not all parameters of the warning signal (104) are adjusted to correspond to the respective parameter of a previously reproduced musical piece (110).

12. An arrangement comprising:
an audio system (130) configured to reproduce an audio signal (100) representing speech or a musical piece (110);
an analyzing unit (132) configured to analyze the audio signal (100), and, if the audio signal (100) represents a musical piece (110), determine at least one parameter of the musical piece (110); and
a warning signal generation unit (134) that is configured to, upon occurrence of a triggering event, generate a warning signal (104), wherein at least one but not all parameters of the warning signal (104) are adjusted to correspond to the respective parameter of the musical piece (110).

13. The arrangement of claim 12, wherein the warning signal (104) is an acoustical signal.

14. The arrangement of claim 11 or 12, wherein, if the audio signal (100) represents pure speech, the warning signal generation unit (134) is configured to
either generate the warning signal (104) as a standard warning signal (104) having a default configuration that is not adjusted depending on the audio signal (100); or
generate the warning signal (104) to correspond to a previously generated warning signal (104); or
adjust at least one but not all parameters of the warning signal (104) to correspond to the respective parameter of a previously reproduced musical piece (110).

## Patentansprüche

1. Verfahren, umfassend:
Empfangen eines Audiosignals (100), das Sprache oder ein Musikstück (110) darstellt, die/das gerade von einem Audiosystem (130) wiedergegeben wird;
Analysieren des Audiosignals (100) und, falls das Audiosignal (100) ein Musikstück (110) darstellt, Bestimmen mindestens eines Parameters des Musikstücks (110); und
bei Auftreten eines auslösenden Ereignisses, Erzeugen eines Warnsignals (104), wobei mindestens ein, aber nicht alle Parameter des Warnsignals (104) so angepasst werden, dass sie dem jeweiligen Parameter des Musikstücks (110) entsprechen.

2. Verfahren nach Anspruch 1, wobei das Warnsignal (104) ein akustisches Signal ist.

3. Verfahren nach Anspruch 1 oder 2, wobei das Audiosignal (100) ein Musikstück (110) darstellt und der mindestens eine Parameter des Musikstücks (110) mindestens eines der Folgenden umfasst
einen Rhythmus;
einen Schlag;
ein Tempo;
eine Melodie;
eine Frequenz;
eine Taktart;
die Schläge pro Minute;
einen Lautstärkepegel;
das Vorhandensein von mindestens einem Musikinstrument;
das Vorhandensein einer großen Trommel; und
das Vorhandensein einer kleinen Trommel.

4. Verfahren nach einem der Ansprüche 1 bis 3, wobei der mindestens eine Parameter des Warnsignals (104), der so angepasst wird, dass er dem jeweiligen Parameter des Musikstücks (110) entspricht, mindestens eines der Folgenden umfasst
einen Rhythmus;
einen Schlag;
ein Tempo;
eine Taktart; und
die Schläge pro Minute.

5. Verfahren nach einem der Ansprüche 1 bis 4, wobei
das Audiosignal (100) ein Musikstück (110) darstellt und das Bestimmen mindestens eines Parameters des Musikstücks (110) Bestimmen des Schlags des Musikstücks (110) umfasst; und
das Warnsignal (104) so erzeugt wird, dass ein Schlag des Warnsignals (104) gleich, ein Vielfaches oder ein Bruchteil des erfassten Schlags des Musikstücks (110) ist.

6. Verfahren nach Anspruch 5, wobei das Warnsignal (104) eine Vielzahl von aufeinanderfolgenden Warntönen umfasst, wobei die aufeinanderfolgenden Warntöne synchron mit dem Schlag des Musikstücks (110) erzeugt werden.

7. Verfahren nach einem der Ansprüche 2 bis 6, wobei
das Audiosignal (100) ein Musikstück (110) darstellt und das Bestimmen mindestens eines Parameters des Musikstücks (110) Bestimmen des Vorhandenseins mindestens eines Musikinstruments in dem Musikstück (110) umfasst; und
das Warnsignal (104) so erzeugt wird, dass es eine Vielzahl aufeinanderfolgender reiner Töne umfasst oder einem Musikinstrument ähnelt, das in dem Musikstück (110) nicht erkannt wurde.

8. Verfahren nach einem der Ansprüche 2 bis 7, wobei
das Audiosignal (100) ein Musikstück (110) darstellt und das Bestimmen mindestens eines Parameters des Musikstücks (110) Bestimmen eines Lautstärkepegels des Musikstücks (110) umfasst; wenn der erfasste Lautstärkepegel des Musikstücks (110) größer als ein vordefinierter Schwellenpegel ist, Reduzieren des Lautstärkepegels des Musikstücks (110) auf einen Lautstärkepegel unterhalb des Schwellenlautstärkepegels; und
Erzeugen des Warnsignals (104) bei einem Lautstärkepegel, der größer als der Schwellenlautstärkepegel ist.

9. Verfahren nach Anspruch 2, wobei
das Audiosignal (100) reine Sprache darstellt; und
das Warnsignal (104) als ein Standardwarnsignal (104) erzeugt wird, das eine Standardkonfiguration aufweist, die nicht in Abhängigkeit von dem Audiosignal (100) angepasst ist.

10. Verfahren nach Anspruch 2, wobei
das Audiosignal (100) reine Sprache darstellt; und
das Warnsignal (104) so erzeugt wird, dass es einem zuvor erzeugten Warnsignal (104) entspricht.

11. Verfahren nach Anspruch 2, wobei
das Audiosignal (100) reine Sprache darstellt; und
mindestens ein, aber nicht alle Parameter des Warnsignals (104) so angepasst werden, dass sie dem jeweiligen Parameter eines zuvor wiedergegebenen Musikstücks (110) entsprechen.

12. Anordnung, umfassend:
ein Audiosystem (130), das dazu konfiguriert ist, ein Audiosignal (100) wiederzugeben, das Sprache oder ein Musikstück (110) darstellt;
eine Analysiereinheit (132), die dazu konfiguriert ist, das Audiosignal (100) zu analysieren und, falls das Audiosignal (100) ein Musikstück (110) darstellt, mindestens einen Parameter des Musikstücks (110) zu bestimmen; und
eine Warnsignalerzeugungseinheit (134), die dazu konfiguriert ist, bei Auftreten eines auslösenden Ereignisses, ein Warnsignal (104) zu erzeugen, wobei mindestens ein, aber nicht alle Parameter des Warnsignals (104) so angepasst werden, dass sie dem jeweiligen Parameter des Musikstücks (110) entsprechen.

13. Anordnung nach Anspruch 12, wobei das Warnsignal (104) ein akustisches Signal ist.

14. Anordnung nach Anspruch 11 oder 12, wobei, wenn das Audiosignal (100) reine Sprache darstellt, die Warnsignalerzeugungseinheit (134) dazu konfiguriert ist, entweder das Warnsignal (104) als ein Standardwarnsignal (104) zu erzeugen, das eine Standardkonfiguration aufweist, die nicht in Abhängigkeit von dem Audiosignal (100) angepasst ist; oder das Warnsignal (104) so zu erzeugen, dass es einem zuvor erzeugten Warnsignal (104) entspricht; oder
mindestens einen, aber nicht alle Parameter des Warnsignals (104) so anzupassen, dass sie dem jeweiligen Parameter eines zuvor wiedergegebenen Musikstücks (110) entsprechen.

## Revendications

1. Procédé comprenant :
la réception d'un signal audio (100) représentant des paroles ou un morceau de musique (110) actuellement reproduits par un système audio (130) ;
l'analyse du signal audio (100), et, si le signal audio (100) représente un morceau de musique (110), la détermination d'au moins un paramètre du morceau de musique (110) ; et
lors de l'apparition d'un événement déclencheur, la génération d'un signal d'avertissement (104), dans lequel au moins un mais pas tous les paramètres du signal d'avertissement (104) sont ajustés pour correspondre au paramètre respectif du morceau de musique (110).

2. Procédé selon la revendication 1, dans lequel le signal d'avertissement (104) est un signal acoustique.

3. Procédé selon la revendication 1 ou 2, dans lequel le signal audio (100) représente un morceau de musique (110) et l'au moins un paramètre du morceau de musique (110) comprend au moins l'un parmi
un rythme ;
une pulsation ;
un tempo ;
une mélodie ;
une fréquence ;
une métrique ;
les pulsations par minute ;
un niveau de volume ;
la présence d'au moins un instrument de musique ;
la présence d'une grosse caisse ; et
la présence d'une caisse claire.

4. Procédé selon l'une quelconque des revendications 1 à 3, dans lequel l'au moins un paramètre du signal d'avertissement (104) qui est ajusté pour correspondre au paramètre respectif du morceau de musique (110) comprend au moins l'un parmi
un rythme ;
une pulsation ;
un tempo ;
une métrique ; et
les pulsations par minute.

5. Procédé selon l'une quelconque des revendications 1 à 4, dans lequel
le signal audio (100) représente un morceau de musique (110) et la détermination d'au moins un paramètre du morceau de musique (110) comprend la détermination de la pulsation du morceau de musique (110) ; et
le signal d'avertissement (104) est généré de sorte qu'une pulsation du signal d'avertissement (104) soit égale à, un multiple de, ou une fraction de la pulsation détectée du morceau de musique (110).

6. Procédé selon la revendication 5, dans lequel le signal d'avertissement (104) comprend une pluralité de tonalités d'avertissement successives, dans lequel les tonalités d'avertissement successives sont générées en rythme avec la pulsation du morceau de musique (110).

7. Procédé selon l'une quelconque des revendications 2 à 6, dans lequel
le signal audio (100) représente un morceau de musique (110) et la détermination d'au moins un paramètre du morceau de musique (110) comprend la détermination de la présence d'au moins un instrument de musique dans la pièce de musique (110) ; et
le signal d'avertissement (104) est généré pour comprendre une pluralité de tonalités pures successives ou pour ressembler à un instrument de musique qui n'a pas été détecté dans le morceau de musique (110).

8. Procédé selon l'une quelconque des revendications 2 à 7, dans lequel
le signal audio (100) représente un morceau de musique (110) et la détermination de l'au moins un paramètre du morceau de musique (110) comprend la détermination d'un niveau de volume du morceau de musique (110) ; et
si le niveau de volume détecté du morceau de musique (110) est supérieur à un niveau seuil prédéfini, la réduction du niveau de volume du morceau de musique (110) à un niveau de volume inférieur au niveau de volume seuil ; et
la génération du signal d'avertissement (104) à un niveau de volume supérieur au niveau de volume seuil.

9. Procédé selon la revendication 2, dans lequel
le signal audio (100) représente uniquement des paroles ; et le signal d'avertissement (104) est généré en tant que signal d'avertissement standard (104) ayant une configuration par défaut qui n'est pas ajustée en fonction du signal audio (100).

10. Procédé selon la revendication 2, dans lequel
le signal audio (100) représente uniquement des paroles ; et
le signal d'avertissement (104) est généré pour correspondre à un signal d'avertissement généré précédemment (104).

11. Procédé selon la revendication 2, dans lequel
le signal audio (100) représente uniquement des paroles ; et au moins un mais pas tous les paramètres du signal d'avertissement (104) sont ajustés pour correspondre au paramètre respectif d'un morceau de musique précédemment reproduit (110).

12. Agencement comprenant :
un système audio (130) configuré pour reproduire un signal audio (100) représentant des paroles ou un morceau de musique (110) ;
une unité d'analyse (132) configurée pour analyser le signal audio (100) et, si le signal audio (100) représente un morceau de musique (110), déterminer au moins un paramètre du morceau de musique (110) ; et
une unité de génération de signal d'avertissement (134) qui est configurée pour, lors de l'apparition d'un événement déclencheur, générer un signal d'avertissement (104), dans lequel au moins un mais pas tous les paramètres du signal d'avertissement (104) sont ajustés pour correspondre aux paramètre respectifs du morceau de musique (110).

13. Agencement selon la revendication 12, dans lequel le signal d'avertissement (104) est un signal acoustique.

14. Agencement selon la revendication 11 ou 12, dans lequel, si le signal audio (100) représente uniquement des paroles, l'unité de génération de signal d'avertissement (134) est configurée pour
générer le signal d'avertissement (104) en tant que signal d'avertissement standard (104) ayant une configuration par défaut qui n'est pas ajustée en fonction du signal audio (100) ; ou
générer le signal d'avertissement (104) pour correspondre à un signal d'avertissement généré précédemment (104) ; ou
ajuster au moins un mais pas tous les paramètres du signal d'avertissement (104) pour correspondre au paramètre respectif d'un morceau de musique précédemment reproduit (110).
